# EUROPÄISCHE PATENTANMELDUNG

(11) **EP 2 637 300 A1**
(43) Veröffentlichungstag der Anmeldung: **11.09.2013**
(21) Anmeldenummer: 12158399.1
(22) Anmeldetag: 07.03.2012
(51) Int. Cl.: H02P 29/00, H02P 21/00, H02P 23/00, H02J 9/06, F03D 7/02

(54) **Antriebsregelungsverfahren**

(71) Anmelder: Siemens Aktiengesellschaft, 80333 München (DE)
(72) Erfinder: Ahnert, Karsten, 09112 Chemnitz (DE); Steinigeweg, Rolf-Jürgen, 91074 Herzogenaurach (DE)

(57) **Zusammenfassung**

Die Erfindung betrifft ein Verfahren zum Steuern eines Elektromotors (18). Das Verfahren umfasst die Schritte Erfassen, ob der Mittelwert einer Versorgungsspannung (12) des Elektromotors (18) schwankt und Betreiben des Elektromotors (18) im Feldschwächbetrieb, wenn die Versorgungsspannung (12) des Elektromotors (18) schwankt.

## Beschreibung

Die Erfindung betrifft ein Verfahren zum Steuern eines Elektromotors, eine Steuervorrichtung zur Durchführung des Verfahrens, eine Vorrichtung zum Verstellen von Rotorblättern einer Windkraftanlage und die Windkraftanlage.

Eine Vorrichtung gemäß dem Oberbegriff des Anspruchs 1 ist beispielsweise aus der EP 1 852 605 A2 bekannt.

Es ist daher Aufgabe der Erfindung, die bekannte Vorrichtung zu verbessern.

Die Aufgabe wird durch die Merkmale der unabhängigen Ansprüche gelöst. Die abhängigen Ansprüche enthalten bevorzugte Weiterbildungen der Erfindung.

Der Erfindung liegt die Überlegung zugrunde, dass die maximal mit einem Elektromotor erreichbare Drehzahl vom Mittelwert der an den Elektromotor angelegten Speisespannung abhängig ist. Schwankt die Spannung, schwankt damit auch die mit dem Elektromotor maximal erreichbare Drehzahl. Fällt die maximal erreichbare Drehzahl unterhalb des Maximums des Betriebsdrehzahlbereichs des Elektromotors, ist der Elektromotor nur noch eingeschränkt einsatzbereit.

Um möglichst unabhängig von Spannungsschwankungen die maximal erreichbare Drehzahl zu erreichen könnte der Elektromotor mit einem entsprechenden Kostenaufwand überdimensioniert werden, so dass die maximal erreichbare Drehzahl ausreichend weit über dem Maximum des Betriebsdrehzahlbereichs des Elektromotors liegt. Alternativ könnte ebenfalls anwendungsspezifisch ebenfalls mit einem entsprechenden Kostenaufwand ein Elektromotor sonderangefertigt werden, dessen elektromagnetische Kraft an den speziellen Anwendungsfall angepasst wird. In der Vorrichtung der eingangs genannten Art wird die an den Elektromotor angelegte Spannung zwar durch einen Gleichspannungswandler konstant gehalten, wenn die Versorgungsspannung schwankt, aber auch dieser Gleichspannungswandler bedeutet einen Mehraufwand an Kosten.

Demgegenüber schlägt die Erfindung vor, einen Elektromotor im Feldschwächbetrieb zu betreiben, wenn die Versorgungsspannung des Elektromotors schwankt. Zwar sinkt im Feldschwächbetrieb bei steigender Drehzahl des Elektromotors sein Drehmoment, die Versorgungsspannung des Elektromotors ist jedoch nahezu unabhängig von seiner Drehzahl wodurch sich mit dem Elektromotor selbst bei Schwankungen seiner Versorgungsspannung noch hohe Drehzahlen fahren lassen. Besondere kostenintensive Zusatzelemente zur Kompensation der Versorgungsspannungsschwankungen sind obsolet.

Die Erfindung gibt daher Verfahren zum Steuern eines Elektromotors an, dass die Schritte Erfassen, ob der Mittelwert einer Versorgungsspannung des Elektromotors schwankt und Betreiben des Elektromotors im Feldschwächbetrieb, wenn der Mittelwert der Versorgungsspannung des Elektromotors schwankt. Ob der Mittelwert der Versorgungsspannung schwankt kann dabei auf jede erdenkliche Weise bestimmt werden. So kann der Mittelwert selbst oder eine andere Größe ausgewertet werden, die indirekt anzeigt, ob der Mittelwert schwankt. Eine weitere Möglichkeit ist Gegenstand der Unteransprüche.

Durch den Betrieb des Elektromotors im Feldschwächbetrieb bei schwankender Versorgungsspannung kann der Elektromotor auf kostengünstige Weise unabhängig von seiner Versorgungsspannung in hohen Drehzahlbereichen betrieben werden. Zusätzliche Schaltelemente, die neben ihrem Kostenaufwand auch Ausfallerscheinungen unterliegen und platz- sowie gewichtsintensiv sind, sind obsolet.

In einer Weiterbildung der Erfindung schwankt der Mittelwert der Versorgungsspannung, wenn sie aus einem ladestandsabhängigen Gleichspannungsenergiespeicher abgegeben wird. Eine ladestandsabhängige Gleichspannungsenergiequelle kann beispielsweise die Notenergieversorgung für einen Stromrichter/Wechselrichter im Antriebsstrang zur Rotorblattverstellung in einer Windkraftanlage sein. Die Notenergieversorgung soll im Falle eines Netzausfalls dafür sorgen, dass die Rotorblätter des Windkraftrades in einen sicheren Zustand überführt werden. Dazu werden die Rotorblätter aus dem Wind gedreht. Die ladestandsabhängige Gleichspannungsenergiequelle der Notenergieversorgung des Windkraftrades wird netzseitig im Normalbetrieb mit elektrischer Energie geladen und versorgt die Elektromotoren der Rotorblätter des Windkraftrades im Netzausfall mit elektrischer Energie.

In einer zusätzlichen Weiterbildung der Erfindung wird der Elektromotor im Feldschwächbetrieb derart betrieben, dass der Elektromotor bei steigender Drehzahl ein sinkendes Drehmoment aufbringt. Das heißt, dass bei einem Elektromotor im Feldschwächbetrieb die Leistungsaufnahme mit einer steigenden Drehzahl nicht erhöht wird, weil die erhöhte Drehzahl über das sinkende Drehmoment ausgeglichen wird. Im Endeffekt wird im Feldschwächbetrieb das magnetische Drehfeld des Elektromotors geschwächt, so dass sich bei höheren Drehzahlen des Elektromotors eine vergleichsweise geringere elektromagnetische Gegenkraft aufbaut, für die bei diesen höheren Drehzahlen entsprechend auch nur eine geringere Versorgungsspannung notwendig ist, um dieser elektromagnetischen Gegenkraft entgegenzuwirken.

In einer anderen Weiterbildung der Erfindung empfängt der Elektromotor als elektrische Energie einen Strom, der sich in eine magnetfeldbildende Stromkomponente und eine drehmomentbildende Stromkomponente zerlegen lässt. Auf diese Weise kann der Elektromotor über eine feldorientierte Regelung beispielsweise drehzahlgeregelt werden.

In einer besonderen Weiterbildung der Erfindung umfasst das angegebene Verfahren Reduzieren der magnetfeldbildenden Stromkomponente zum Betreiben des Elektromotors im Feldschwächbetrieb. Durch die Drehung des Rotors des Elektromotors und damit seines magnetisches Drehfeldes wird eine Gegenspannung erzeugt, die die feldbildenden und momentenbildenden Ströme hemmt und den Motor abbremst. Um die feldbildenden und momentenbildenden Ströme daher aufzubauen muss an den Elektromotor daher eine Spannung angelegt werden, die einerseits die drehzahlabhängige Gegenspannung überwindet und andererseits die feldbildenden und momentenbildenden Ströme aufbaut. Sinkt die Versorgungsspannung des Elektromotors (also im Sinne des angegebenen Verfahrens der Mittelwert der Versorgungsspannung), reduziert das Verfahren die Ursache der Gegenspannung, also die feldbildende Komponente des Motorenstroms. Zwar wird durch eine reduzierte feldbildende Komponente auch das Drehfeld des Elektromotors geschwächt, so dass der Elektromotor in seinem aufbringbaren Drehmoment geschwächt ist, jedoch kann durch die niedrigere Gegenspannung die maximal regelbare Motordrehzahl konstant gehalten werden.

In einer bevorzugten Weiterbildung der Erfindung umfasst das angegebene Verfahren den Schritt Einprägen einer feldschwächenden magnetfeldbildenden Stromkomponente zum Reduzieren der magnetfeldbildenden Stromkomponente. Im Fall eines Asynchronelektromotors ist die magnetfeldbildende Stromkomponente immer größer Null, da die magnetfeldbildende Stromkomponente muss das magnetische Drehfeld erzeugen. Eine Reduktion der magnetfeldbildenden Stromkomponente wird hier dadurch erreicht, dass von einem Sollwert für eine magnetfeldbildende Stromkomponente, die für ein bestimmtes aufrechtzuerhaltendes Drehmoment notwendig ist, die zusätzlich eingeprägte magnetfeldbildende Stromkomponente abgezogen wird. Im Fall eines Synchronelektromotors ist die magnetfeldbildende Stromkomponente gleich Null, da das magnetische Drehfeld durch die Permanentmagneten der Synchronelektromotors erzeugt wird. Zur Reduktion des der magnetfeldbildenden Stromkomponente wird daher die feldbildende Stromkomponente eingeprägt, die das Magnetfeld der Permanentmagneten und damit die Gegen-EMK des Elektromotors schwächt.

In einer besonders bevorzugten Weiterbildung der Erfindung wird der Strom basierend auf der magnetfeldbildenden Stromkomponente und der drehmomentbildenden Stromkomponente über eine Pulsweitenmodulation geregelt. Der Strom kann jede beliebige Phasenanzahl aufweisen, die geeignet ist, die magnetfeldbildende Stromkomponente und die drehmomentbildende Stromkomponente abzubilden. Durch die Feldschwächung mit dem angegebenen Verfahren entstehen Reserven im Aussteuergrad der Pulsweitenmodulation, wodurch sich die Drehzahl weiter erhöhen lässt.

Die Erfindung gibt auch eine Steuervorrichtung zur Durchführung des angegebenen Verfahrens an.

In einer Weiterbildung weist die angegebene Steuervorrichtung einen Speicher und einen Prozessor auf. Dabei ist das Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Die Erfindung gibt auch eine Vorrichtung zum Verstellen von Rotorblättern einer Windkraftanlage mit einem Elektromotor an, der durch ein angegebenes Verfahren angesteuert wird.

Die Erfindung gibt auch eine Windkraftanlage mit einem Rotorblatt zum Antrieb eines Generators, einem Elektromotor zum Verstellen des Rotorblattes und einer angegebenen Vorrichtung zum Steuern des Elektromotors an.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:

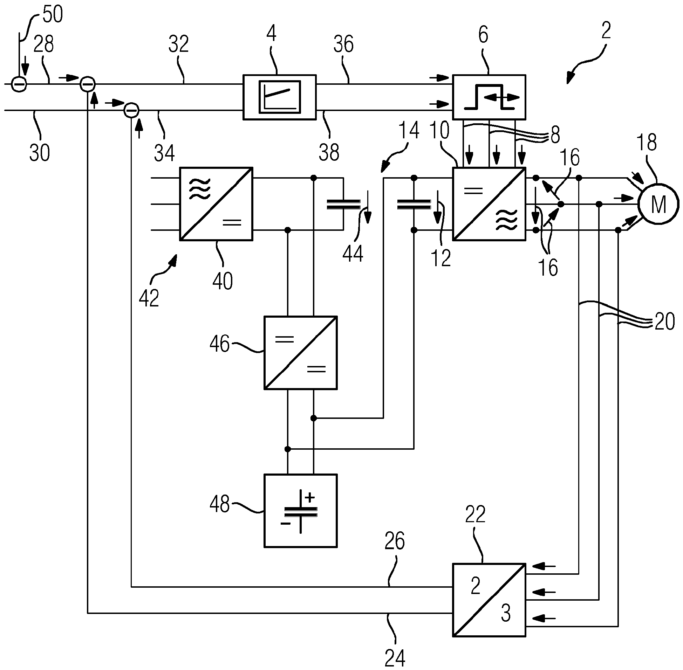

- FIG 1: ein Prinzipschaltbild eines Regelkreises mit einem Elektromotor als Regelstrecke zeigt.

Im Regelkreis 2 wird ein Pulsweitenmodulator 4 durch einen Regler 6 in einer noch zu beschreibenden Weise angesteuert. Der Pulsweitenmodulator 4 gibt Schaltsignale 8 aus, mit denen ein dreiphasiger Wechselrichter 10 angesteuert wird, der aus einer Versorgungsgleichspannung 12 aus einem noch zu beschreibenden Zwischenkreis 14 eine dreiphasige Wechselspannung 16 erzeugt, mit der ein dreiphasiger Elektromotor 18 angetrieben wird. Der dreiphasige Elektromotor 18 kann in der vorliegenden Ausführung ein Asynchronmotor oder ein Synchronmotor sein. Der vom dreiphasigen Elektromotor 18 durch die dreiphasige Wechselspannung 16 aufgenommene dreiphasige Ist-Strom 20 wird über einen Koordinatentransformator 22 in einen Stromzeiger mit einer magnetfeldorientierten Ist-Stromkomponente 24 und einer drehmomentorientierten Ist-Stromkomponente 26 umgewandelt. Die magnetfeldorientierte Ist-Stromkomponente 24 und die drehmomentorientierte Ist-Stromkomponente 26 werden entsprechend mit einer magnetfeldorientierten Soll-Stromkomponente 28 und einer drehmomentorientierten Soll-Stromkomponente 30 zu jeweils einer entsprechenden magnetfeldorientierten Regeldifferenz 32 und einer drehmomentorientierten Regeldifferenz 34 subtrahiert und die dann an den Regler 4 ausgegeben werden.

Der Regler 4 ist in der vorliegenden Ausführung ein PI-Regler, dessen Reglerverstärkung und Nachstellzeit in einer dem Fachmann bekannten Weise vorgebbar sind. Der Regler 4 gibt einen Sollspannungszeiger mit einer Sollspannungsamplitude 36 und einer Sollspannungsphase 38 aus, der durch den Pulsweitenmodulator 6 in einer dem Fachmann bekannten Weise am dreiphasigen Wechselrichter 10 in die dreiphasige Wechselspannung 16 umgesetzt wird.

Durch das Anlegen der dreiphasigen Wechselspannung 16 an den dreiphasigen Elektromotor 18 wird der dreiphasige Strom 20 durch den dreiphasigen Elektromotor 18 erzeugt. Dabei erzeugt die magnetfeldbildende Stromkomponente 24, die im Koordinatentransformator 22 berechnet wird, das magnetische Drehfeld des dreiphasigen Elektromotors 18. Durch dieses magnetische Drehfeld wird im Elektromotor 18 eine magnetische Kraft aufgebaut, die der Drehung des Elektromotors 18 hemmend entgegenwirkt, und die durch die elektrische Leistungszufuhr aus dem Wechselrichter 10 überwunden werden muss. Unter normalen Betriebsbedingungen wird diese hemmende magnetische Kraft durch die dreiphasige Wechselspannung 16 vollständig überwunden.

Im Folgenden wird auf eine beispielhafte Ausnahmesituation eingegangen, bei der die hemmende magnetische Kraft durch die dreiphasige Wechselspannung 16 nicht vollständig überwunden werden kann.

Die Versorgungsgleichspannung 12 wird in der vorliegenden Ausführung unter normalen Betriebsbedingungen, unter denen auch die hemmende magnetische Kraft durch die dreiphasige Wechselspannung 16 vollständig überwunden werden kann, aus einem dreiphasigen Gleichrichter 40 erzeugt, der seine elektrische Energie aus einem elektrischen Energieversorgungsnetz 42 bezieht und eine Quellgleichspannung 44 abgibt. Die Quellgleichspannung 44 wird unter normalen Betriebsbedingungen in die Versorgungsgleichspannung 12 über einen Gleichspannungswandler 46 umgewandelt, wobei die Versorgungsgleichspannung 12 auch gleichzeitig einen Notenergiespeicher 48 lädt, der in der vorliegenden Ausführung ein Doppelschichtkondensator ist.

In der zuvor erwähnten Ausnahmesituation fällt die elektrische Energieversorgung aus dem elektrischen Energieversorgungsnetz 42 aus und die Quellgleichspannung 44 bricht zusammen. Somit liegt als Versorgungsgleichspannung 12 eine Spannung an, die aus dem Notenergiespeicher 48 abgegeben wird, und die zeitlichen Schwankungen unterliegt, indem sie absinkt. Durch das Absinken der Versorgungsgleichspannung 12 sinkt jedoch auch die dreiphasige Wechselspannung 16 in ihrer

Amplitude und somit in ihrem Mittelwert. Dadurch kann die oben erwähnte, durch die magnetfeldbildende Stromkomponente 24 erzeugte hemmende magnetische Kraft nicht mehr vollständig überwunden werden, wodurch die Drehzahl des dreiphasigen Elektromotors 18 aufgrund der steigenden Gegenkraft sinkt.

Um in dieser Ausnahmesituation ein Hochsetzen der Versorgungsgleichspannung 12 zu vermeiden, wird vorgeschlagen, die magnetfeldbildende Stromkomponente 24 selbst zu reduzieren, was unmittelbar zu einer geringeren hemmenden magnetischen Kraft führt.

Zwar wird durch die geringere magnetfeldbildende Stromkomponente 24 auch die Leistung des dreiphasigen Elektromotors 18 reduziert, da im Fall einer geringeren magnetfeldbildenden Stromkomponente 24 ein entsprechend geringeres magnetisches Drehfeld im dreiphasigen Elektromotor 18 aufgebaut wird, wodurch auch nur noch ein entsprechendes geringeres Drehmoment durch den dreiphasigen Elektromotor 18 aufgebaut werden kann, für die Zeit der Ausnahmesituation können nun mit der konstant haltbaren Drehzahl des Elektromotors 18 Gegen- oder Schutzmaßnahmen eingeleitet werden. Bei einem Windrad können derartige Schutzmaßnahmen beispielsweise darin bestehen, dass die Rotorblätter im Rahmen des Pitchantriebs Stillgelegt werden, sollte das elektrische Energieversorgungsnetz ausfallen.

In der vorliegenden Ausführung wird die magnetfeldbildende Stromkomponente 24 dadurch reduziert, dass vom Sollwert 28 für die magnetfeldbildende Stromkomponente 24 ein Korrekturwert 50 abgezogen wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Steuern eines Elektromotors (18), **gekennzeichnet durch** Erfassen, ob der Mittelwert einer Versorgungsspannung (12) des Elektromotors (18) schwankt und Betreiben des Elektromotors (18) im Feldschwächbetrieb, wenn die Versorgungsspannung (12) des Elektromotors (18) schwankt.

2. Verfahren nach Anspruch 1, wobei der Mittelwert der Versorgungsspannung (12) des Elektromotors (18) schwankt, wenn sie aus einem ladestandsabhängigen Gleichspannungsenergiespeicher (48) abgegeben wird.

3. Verfahren nach Anspruch 1 oder 2, wobei der Elektromotor (18) im Feldschwächbetrieb derart betrieben wird, dass der Elektromotor (18) bei steigender Drehzahl ein sinkendes Drehmoment aufbringt.

4. Verfahren nach einem der vorstehenden Ansprüche, wobei der Elektromotor (18) als elektrische Energie einen Strom (20) empfängt, der sich in eine magnetfeldbildende Stromkomponente (24) und eine drehmomentbildende Stromkomponente (26) zerlegen lässt.

5. Verfahren nach Anspruch 4, umfassend Reduzieren der magnetfeldbildenden Stromkomponente (24) zum Betreiben des Elektromotors (18) im Feldschwächbetrieb.

6. Verfahren nach Anspruch 5, umfassend Einprägen einer feldschwächenden magnetfeldbildenden Stromkomponente (50) zum Reduzieren der magnetfeldbildenden Stromkomponente (24).

7. Verfahren nach einem der Ansprüche 4 bis 6, wobei der Strom (20) basierend auf Sollwerten (28, 30) für die magnetfeldbildende Stromkomponente (24) und der drehmomentbildenden Stromkomponente (26) über eine Pulsweitenmodulation (6) geregelt wird.

8. Steuervorrichtung zur Durchführung eines Verfahrens nach einem der vorstehenden Ansprüche.

9. Vorrichtung zum Verstellen von Rotorblättern einer Windkraftanlage mit einem Elektromotor (18), der durch ein Verfahren nach einem der vorstehenden Ansprüche 1 bis 7 angesteuert wird.

10. Windkraftanlage mit einem Rotorblatt zum Antrieb eines Generators, einem Elektromotor (18) zum Verstellen des Rotorblattes und einer Vorrichtung nach Anspruch 9 zum Steuern des Elektromotors (18).
